# EUROPÄISCHE PATENTSCHRIFT

(11) **EP 1 215 104 B1**
(45) Veröffentlichungstag und Bekanntmachung des Hinweises auf die Patenterteilung: **11.06.2003**
(21) Anmeldenummer: 01126510.5
(22) Anmeldetag: 10.11.2001
(51) Int. Cl.: B62D 7/14, B60K 17/36, B62D 61/10

(54) **Verfahren zur Einflussnahme auf die Lenkung und/oder den bedarfsweisen Antrieb einer Vor- oder Nachlaufachse in einem Nutzfahrzeug**
Method for influencing the steering and/or the drive, when required, of a leading or trailing axle in an industrial vehicle
Procédé pour influer sur la direction et/ou l'entrainement suivant les besoins d'un essieu poussé ou trainé dans un véhicule utilitaire

(30) Priorität: 14.12.2000 AT 20742000
(43) Veröffentlichungstag der Anmeldung: 19.06.2002
(73) Patentinhaber: MAN Sonderfahrzeuge AG, 1230 Wien (AT)
(72) Erfinder: Pertlik, Rudolf, Dipl.-Ing., 1220 Wien (AT)

(56) Entgegenhaltungen:
- EP-A- 0 934 864
- DE-A- 1 630 277
- DE-A- 2 338 197
- DE-A- 2 554 993
- GB-A- 2 066 182
- US-A- 4 467 886

## Beschreibung

Die Erfindung betrifft ein Verfahren zur Einflussnahme auf die Lenkung und/oder den bedarfsweisen Antrieb einer Vor- oder Nachlaufachse (VLA/NLA) in einem Nutzfahrzeug, insbesondere Lastkraftwagen oder Omnibus, wobei die die Lenkung der Räder der VLA/NLA bewirkenden Organe mechanisch nicht mit den Lenkungsorganen der Vorderachse des Nutzfahrzeugs gekoppelt und Teil einer eigenständigen Lenkungsanlage sind. Ein solches Nutzfahrzeug ist zum Beispiel aus der DE 1 630 277 A bekannt.

Aus der DE 198 01 590 A1 ist ein Schwerlastkraftwagen bekannt, bei dem einer ersten, nicht angetriebenen Vorderachse mit herkömmlicher mechanischer Lenkung ihrer Räder eine weitere, nicht angetriebene Achse nachgeordnet ist, deren Räder über Organe lenkbar sind, die mechanisch nicht mit den Lenkungsorganen der ersten Vorderachse gekoppelt, sondern Teil einer eigenständigen Lenkungsanlage sind. Zur Lenkung der Räder der weiteren Achse kann ein auf den Radträger eines Rades einwirkender, einenendes dort, andernendes am Fahrzeugrahmen oder Achskörper angelenkter Druckzylinder sowie eine die Radträger beider Räder verbindende Spurstange vorgesehen sein. Alternativ hierzu können zwei Druckzylinder vorgesehen sein, von denen jeder einenendes auf den Radträger eines der beiden Räder einwirkt und andemendes am Fahrzeugrahmen oder Achskörper angelenkt ist. Der bzw. die Druckzylinder ist bzw. sind mit seinen beiderseits eines Stellkolbens angreifenden Druckräumen an einer Druckölversorgungseinrichtung angeschlossen. Zur Steuerung der Lenkung der Räder der weiteren Achse ist ein elektronischer Rechner vorgesehen, der sensorisch erfasste Lenkwinkel-lstwerte der ersten Achse zugeführt bekommt und anhand eingespeicherter Daten/Kennwerte den Lenkeinschlag der Räder der weiteren Achse errechnet und dann entsprechende Regel- und Steuerbefehle an die Druckölversorgungseinrichtung für eine entsprechende Betätigung des/der Druckzylinder(s) ausgibt. Zur Vermeidung von Problemen im Falle einer Störung in dieser Lenkungsanlage ist eine relativ aufwendige Sicherheitseinrichtung mit einem hydraulischen Ersatz-Druckzylinder und zugehöriger Druckölversorgung sowie Steuereinrichtung vorgesehen. Die Organe dieser Sicherheitseinrichtung übernehmen bei Ausfall der normalen Lenkungsorgane die Lenkung der Räder der weiteren Achse. Ersichtlicherweise ist der Aufwand für diese Sicherheitseinrichtung erheblich und sowohl mit hohem Bauraumbedarf als auch hohen Zusatzkosten verbunden. Alternativ hierzu ist es bekannt, bei gelenkten, nicht angetriebenen Vor- oder Nachlaufachsen bei Störungen in deren Lenkungsanlagen diese abzuschalten bzw. in einen Zustand zu versetzen, in dem keine Lenkbewegung veranlasst wird. Die Räder der Vor- bzw. Nachlaufachse folgen dann bei diesem, als freigegebene Lenkung zu bezeichnenden Zustand der durch die Reibungskräfte und den Nachlauf bestimmten Bahn, spuren also selbst ein.

Diese Methode der Einflussnahme bei Störungen versagt aber bei angetriebenen Vor- oder Nachlaufachsen, da durch die Antriebskräfte das Selbstspurverhalten der Räder aufgehoben ist. Dieses erforderte daher bei angetriebenen Vor- oder Nachlaufachsen zweikreisige Lenkungen z. B. jener der eingangs beschriebenen, aus der DE 198 01 590 A1 bekannten Art, die bei Störungen im ersten Kreis die Lenkfähigkeit der Räder der Vor- bzw. Nachlaufachse aufrechterhalten oder alternativ die Räder in Mittelstellung zurückführen und in dieser Stellung evtl. blockieren. Letzteres ist in einigen Einsatzfällen problematisch.

Es ist daher Aufgabe der Erfindung, für ein Nutzfahrzeug, insbesondere Lastkraftwagen oder Omnibus, das mit einer gelenkten und auch bedarfsweise antreibbaren Vor- oder Nachlaufachse ausgestattet ist, ein Verfahren zur Einflussnahme auf die Lenkung und den Antrieb der Vor- bzw. Nachlaufachse zu schaffen, mit dem mit vergleichsweise einfachem Aufwand etwaigen Störungen abgeholfen oder vorgebeugt werden kann.

Diese Aufgabe ist erfindungsgemäß durch die Merkmale des Anspruchs 1 in der Weise gelöst, dass der Antrieb der VLA/NLA
a) bei unterhalb einer festgelegten Fahrgeschwindigkeit erkannten Störungen in der Lenkungsanlage der VLA/NLA oder
b) bei Überschreiten einer festgelegten Fahrgeschwindigkeit oder
c) bedarfsabhängig, sobald der Schlupf an einer anderen angetriebenen Fahrzeugachse unter einen vorbestimmten Schwellenwert abfällt,
abgeschaltet, wahlweise auch die Lenkungsanlage der VLA/NLA abgeschaltet wird.

Details und spezielle Anwendungsformen des erfindungsgemäßen Verfahrens sind in den Unteransprüchen angegeben. Da diese ihre vollständige Stütze in der Beschreibung haben, sei an dieser Stelle auf deren wörtlichen Zitierung verzichtet.

Das erfindungsgemäße Verfahren hat den Vorteil, dass bei einem Auftreten von Störungen unterhalb einer bestimmten Fahrgeschwindigkeit oder zur Vermeidung von Störungen in den Lenkungsanlagen von Vor- oder Nachlaufachsen oberhalb einer bestimmten Fahrgeschwindigkeit oder sobald hoher Zugkraftbedarf, gekennzeichnet durch den Schlupf an einer anderen angetriebenen Fahrzeugachse, nicht mehr vorhanden sind, durch Abschalten des Antriebs der Vor- bzw. Nachlaufachse, gegebenenfalls auch der Lenkungsanlage oder eine bestimmte Einflussnahme auf diese, an den Rädern der Vor- bzw. Nachlaufachse ein Zustand herbeigeführt wird, der jenem nicht angetriebener Achsen entspricht. Dies bedeutet in einem solchen Fall bei einkreisigen Lenkungsanlagen, dass die Räder lenkungsmäßig freigegeben sind und dann selbstspurend der durch die Reibungskräfte und den Nachlauf bestimmten Bahn folgen können. Bei zweikreisigen Lenkungsanlagen besteht die Möglichkeit, die dann nicht mehr angetriebenen Räder mit vermindertem Kraftaufwand mittels des zweiten Kreises entweder weiterhin zu lenken, was insbesondere bei Fahrt unterhalb einer festgelegten Fahrgeschwindigkeit der Fall sein wird, oder in ihre dem Geradeauslauf entsprechende Mittelstellung zu überführen und dort gegebenenfalls zu blockieren, was insbesondere bei Fahrt oberhalb der festgelegten Fahrgeschwindigkeit der Fall sein wird.

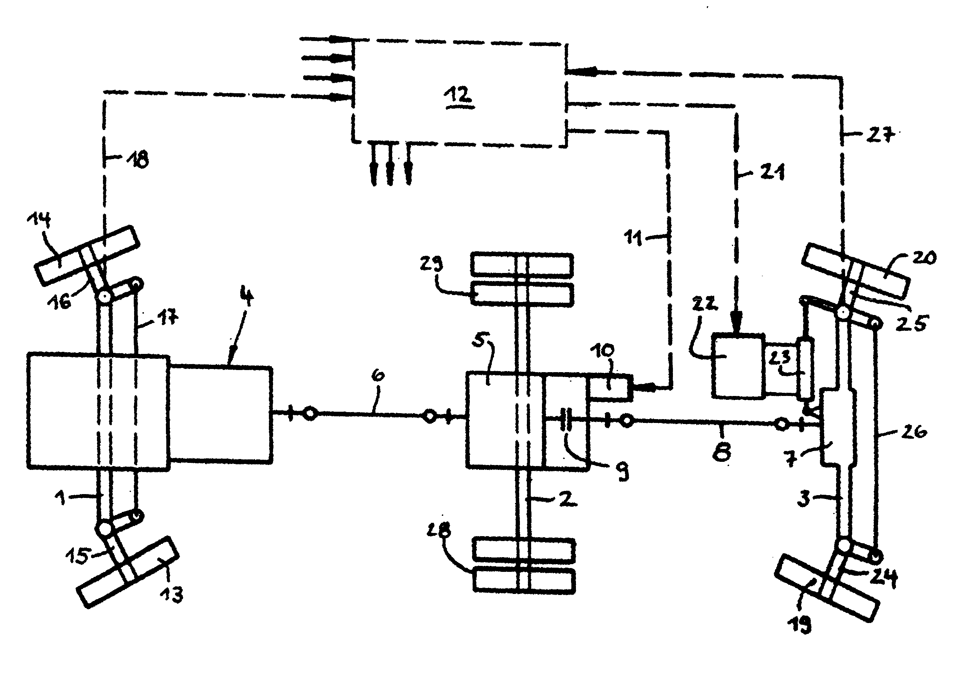

Nachstehend ist die Erfindung anhand eines in der Zeichnung dargestellten Ausführungsbeispiels näher erläutert.

In der Zeichnung ist schematisch ein Nutzfahrzeug dargestellt, bei dem es sich beispielsweise um einen Lastkraftwagen oder Omnibus handeln kann, dessen Vorderachse mit 1, Hinterachse mit 2 und eine weitere Achse 3 bezeichnet sind. Bei der weiteren Achse 3 kann es sich um eine Vorlaufachse oder Nachlaufachse, die zur Hinterachse 2 benachbart ist, oder um eine Nachlaufachse handeln, die der Vorderachse 1 als hintere Vorderachse nachgeordnet ist. Die Hinterachse 2 ist von einem z. B. aus einer Brennkraftmaschine, Kupplung und Getriebe bestehenden Antriebsaggregat 4 her über eine an ihrem Achsgetriebe 5 angeschlossene Kardanwelle 6 angetrieben. Die weitere Achse 3 - nachfolgend VLA/NLA 3 genannt - ist im dargestellten Beispiel vom Achsgetriebe 5 der Hinterachse 2 her über eine die Verbindung zu ihrem Achsgetriebe 7 herstellende Kardanwelle 8 antreibbar und zwar bedarfsweise, wobei die Zuschaltung des Antriebs durch Schließen einer Kupplung 9 und das Abschalten des Antriebs durch Öffnung der Kupplung 9 erfolgt. Der im dargestellten Fall am bzw. im Achsgetriebe 5 der Hinterachse 2 angeordneten Kupplung 9 ist eine Betätigungseinrichtung 10 zugeordnet, die entsprechende Kupplungsschaltbefehle über die Steuerleitung 11 von einen rechnergestützt arbeitenden elektronischen Steuergerät 12 erhält. Bei diesem kann es sich um einen zentralen Bord- oder Fahrzeugführungsrechner, alternativ aber auch um ein von diesem angesteuertes und nur für die Einflussnahme auf den Antrieb der VLA/NLA 3 und deren Lenkung maßgebliches Gerät handeln.

Zur Lenkung der Räder 13, 14 der Vorderachse 1 ist eine nicht dargestellte Servolenkeinrichtung vorgesehen, die eine hydraulische Druckölbereitstellungseinrichtung und ein Lenkgetriebe aufweist, das die vom Fahrer über ein Lenkrad und eine Lenksäule her eingeleiteten Lenkbewegungen hydraulisch unterstützt über ein mehrgliedriges Lenkgestänge auf Radträger 15, 16 überträgt, wobei diese zur Synchronisierung des Lenkeinschlages beider Räder 13, 14 über eine Spurstange 17 miteinander gekoppelt sind. Von einen z. B. an der Lenksäule oder einen anderen Organ der Vorderachs-Lenkung angeordneten Sensor erhält das Steuergerät 12 über Signalleitung 18 den Vorderachs-Lenkwinkel zugeführt. Ein steuergerätinterner Rechner errechnet dann auf der Basis des Vorderachs-Lenkwinkels anhand eingespeicherter Daten und Kennwerte den Lenkeinschlag der Räder 19, 20 der VLA/NLA 3 und gibt dann entsprechende Regel und Steuerbefehle über eine Signalleitung 21 an eine Druckölversorgungseinrichtung 22 für eine entsprechende nachführende Betätigung wenigstens eines Druckzylinders 23 aus. Dieser Druckzylinder 23 ist einenendes am Achsgetriebe 7 der VLA/NLA 3 oder dem Rahmen des Nutzfahrzeugs angelenkt und wirkt andernendes auf den Radträger 24 bzw. 25 eines Rades 19 bzw. 20 der VLA/NLA 3, welche Radträger 24, 25 im dargestellten Fall zur Synchronisierung der Lenkbewegung über eine Spurstange 26 miteinander gekoppelt sind. Anstelle der Synchronisierung Ober die Spurstange 26 oder zusätzlich kann auch ein zweiter Druckzylinder vorgesehen sein, der jenem - 23 - entspricht, aber auf den Radträger des anderen Rades einwirkt. Dieser zweite Druckzylinder kann von der Druckölversorgungseinrichtung 22 her oder einer eigenen Druckölversorgungseinrichtung angesteuert werden. Die Druckölversorgungseinrichtung 22 und die gegebenenfalls weitere Druckölversorgungseinrichtung bildet zusammen mit dem Druckzylinder 23 und dem gegebenenfalls weiteren Druckzylinder sowie den Radträgern 24, 25 und der Spurstange 26 die Lenküngsanlage der VLA/NLA 3. Diese Lenkungsanlage kann einkreisig, alternativ aber auch zweikreisig ausgelegt sein.

Wenn die Lenkungsanlage einkreisig ausgebildet ist, wird diese im Fall ihrer Abschaltung in einen wirkungslosen Zustand versetzt, das heißt, die Druckölversorgungseinrichtung(en) und angeschlossene Druckzylinder sind z. B. drucklos gestellt, so dass die Räder 19, 20 der VLA/NLA 3 nach Abschaltung des Antriebs lenkungsmäßig freigegeben sind und während der Weiterfahrt selbstspurend der durch die Reibungskräfte und den Nachlauf bestimmten Bahn folgen können.

Wenn die Lenkungsanlage dagegen zweikreisig ausgebildet ist, dann ist der erste Kreis ein Normalbetriebskreis, der innerhalb der Druckölversorgungseinrichtung(en) und über die Verbindungen zu dem/den Druckzylinder(n) 23 gegeben ist und über den normalerweise die Lenkung der Räder 19, 20 der VLA/NLA 3 bewirkt wird, während der zweite Kreis ein Sicherheitsbetriebskreis ist, der bei Ausfall des ersten Kreises wirksam wird und dafür sorgt, dass die Räder 19, 20 der VLA/NLA 3 entweder in ihre dem Geradeauslauf entsprechende Mittelstellung überführt oder weiterhin gelenkt werden können. Letzterer Fall kommt insbesondere unterhalb einer bestimmten festgelegten Fahrgeschwindigkeit zur Anwendung, die Einstellung der Räder 19, 20 in Mittelstellung dagegen bei Fahrten oberhalb dieser festgelegten Geschwindigkeit.

Basierend auf diesen technischen Einrichtungen des Nutzfahrzeugs kennzeichnet sich das erfindungsgemäße Verfahren dadurch, dass
der Antrieb der VLA/NLA 3
a) bei unterhalb einer festgelegten Fahrgeschwindigkeit erkannten Störungen in der Lenkungsanlage der VLA/NLA 3 oder
b) bei Überschreiten einer festgelegten Fahrgeschwindigkeit oder
c) bedarfsabhängig, sobald der Schlupf an einer anderen angetriebenen Fahrzeugachse unter einen bestimmten Schwellenwert abfällt,
abgeschaltet, wahlweise auch die Lenkungsanlage der VLA/NLA abgeschaltet wird.

Die Festlegung der verfahrensmäßig wirksamen Fahrgeschwindigkeit ist vom Fahrzeugtyp und dem Einsatzzweck des Nutzfahrzeuges abhängig. Diese Fahrgeschwindigkeit liegt beispielsweise im Bereich von 20 bis 40 km/h und ist als Sollwert im elektronischen Regefgerät 12 abgespeichert. Dieser Geschwindigkeits-Sollwert wird während der Fahrt ständig mit dem erfassten Geschwindigkeits-Istwert verglichen und als Steuergröße entweder im Fall a) oder Fall b) herangezogen.

Die Feststellung, ob ein Störungszustand in der Lenkungsanlage der VLA/NLA 3 vorliegt, kann durch einen Soll-lstwert-Vergleich des Lenkwinkels der Räder 19, 20 der VLA/NLA 3 erfolgen, wobei der Sollwert - abgeleitet vom Lenkeinschlag der Räder 13, 14 der Vorderachse 1 - im Steuergerät 12 berechnet und an die Lenkungsanlage der VLA/NLA 3 für Ausführung der Lenkung weitergegeben wird, während der Istwert des Lenkwinkels z. B. durch einen im Bereich der mechanischen Lenkungsorgane 23, 24, 25, 26 der VLA/NLA 3 angeordneten Sensor erfasst und über die Signalleitung 27 an das Steuergerät 12 gemeldet wird. Dieses erkennt aufgrund des durchgeführten Soll-Istwert-Vergleichs, ob die Lenkung nicht richtig ausgeregelt ist, was ein Indiz für eine Störung sein kann. Sind Soll- und Istwert nicht identisch, erfolgt eine Störmeldung, die auch als Signal für die Abschaltung des Antriebs der VLA/NLA 3 herangezogen wird. Eine Störungsmeldung kann aber auch durch jedes andere Signal erfolgen, das eine Aussage über einen schadhaften Zustand oder Fehlfunktionen der Lenkungsanlage selbst ermöglicht, z. B. eine Stromunterbrechung im elektrischen Teil der Lenkungs- bzw. Steuerungsanlage oder ein Druckabfall an einer signifikanten Stelle im Hydrauliksystem.

In Verbindung mit einkreisigen VLA/NLA-Lenkungsanlagen kann das erfindungsgemäße Verfahren in der Weise zur Anwendung kommen, dass bei unterhalb der festgelegten Fahrgeschwindigkeit erkannten Störungen in der Lenkungsanlage der VLA/NLA 3 der Antrieb der VLA/NLA 3 abgeschaltet und die Lenkungsanlage in einen wirkungslosen Zustand versetzt wird, so dass die lenkungsmäßig freigegebenen, nicht mehr angetriebenen Räder der VLA/NLA 3 dann selbstspurend der durch die Reibungskräfte und den Nachlauf bestimmten Bahn folgen können.

Alternativ hierzu kann das erfindungsgemäße Verfahren in Verbindung mit einkreisigen Lenkungsanlagen in der Weise zur Anwendung kommen, dass dann, wenn keine Störungsmeldung vorliegt, bei Überschreiten der festgelegten Fahrgeschwindigkeit sowohl der Antrieb als auch die Lenkungsanlage der VLA/NLA 3 abgeschaltet werden, wobei die Abschaltung des Antriebs in der Regel zeitlich vor, maximal gleichzeitig mit der Abschaltung der Lenkungsanlage erfolgt und die Lenkungsanlage in einen Zustand versetzt wird, in dem keine Lenkbewegung veranlasst wird und die lenkungsmäßig freigegebenen, nicht mehr angetriebenen Räder der VLA/NLA 3 dann selbstspurend der durch die Reibungskräfte und den Nachlauf bestimmten Bahn folgen können.

In Verbindung mit zweikreisigen VLA/NLA-Lenkungsanlagen, bei denen der erste Kreis der Normalbetriebskreis und der zweite Kreis ein Sicherheitskreis ist, kann das erfindungsgemäße Verfahren in der Weise zur Anwendung kommen, dass bei unterhalb der festgelegten Fahrgeschwindigkeit erkannten Störungen im ersten Kreis der Lenkungsanlage der VLA/NLA 3 der Antrieb der VLA/NLA 3 abgeschaltet wird und anschließend deren Räder 19, 20 mit vermindertem Kraftaufwand mittels des zweiten Kreises der Lenkungsanlage in ihre dem Geradeauslauf entsprechende Mittelstellung überführt oder weiterhin gelenkt werden können.

In seiner bedarfsabhängigen Version kommt das erfindungsgemäße Verfahren z. B. in der Weise zur Anwendung, dass der Antrieb der VLA/NLA 3 - sofern keine Störungsmeldung vorliegt und solange hoher Schlupf an den Rädern 28, 29 gegenüber jenen einer nicht angetriebenen Achse, z. B. 1, als Kennzeichen für hohen Zugkraftbedarf festgestellt wird - aufrechtgehalten bleibt, aber bei Absinken dieses Schlupfes unter einen vorbestimmten Schwellenwert ausgeschaltet wird, und dass wahlweise außerdem, sobald bei Weiterfahrt die vorgegebene Fahrgeschwindigkeit überschritten wird, auch die Lenkungsanlage der VLA/NLA 3 abgeschaltet und diese in einen Zustand versetzt wird, in dem keine Lenkbewegung mehr bewirkt wird und dann die lenkungsmäßig freigegebenen, nicht mehr angetriebenen Räder der VLA/NLA 3 selbstspurend der durch die Reibungskräfte und den Nachlauf bestimmten Bahn folgen können.

Die Erfassung eines Schlupfes der Räder 28, 29 gegenüber jenen einer nicht angetriebenen Achse, z. B. jenen 13, 14 der Vorderachse 1, erfolgt durch Messung der jeweiligen Raddrehzahlen mit Mitteln aus fahrzeugintern in der Regel ohnehin vorhandenen Systemen, wie Antiblockiersystem, Antischlupfsystem, Fahrstabilisationssystem, wie radseitigen Sensoren, und durch einen elektronischen Vergleich dieser Ist-Drehzahlen mit Soll-Drehzahlen im Steuergerät 12, wobei dieses, sobald kein Schlupf mehr erkannt wird, ein die Abschaltung des VLA/NLA-Antriebs initiiertes Signal abgibt.

Die Abschaltung des Antriebs der VLA/NLA 3 erfolgt - sofern diese wie im dargestellten Fall vom Achsgetriebe 5 einer vor- oder nachgeordneten angetriebenen Achse 2 her über eine Kardanwelle 8 angetrieben ist - mechanisch durch Öffnung der vorher geschlossenen Kupplung 9.

Falls jedoch die Räder 19, 20 der VLA/NLA 3 jeweils elektromotorisch oder hydromotorisch über entsprechende Antriebsaggregate, z. B. Radnabenmotoren, angetrieben werden, erfolgt die Abschaltung des Antriebs der VLA/NLA 3 durch Abschaltung der Energiezufuhr zu den besagten Antriebsaggregaten.

## Patentansprüche

1. Verfahren zur Einflussnahme auf die Lenkung und/oder den bedarfsweisen Antrieb einer Vor- oder Nachlaufachse (VLA/NLA) in einem Nutzfahrzeug, insbesondere Lastkraftwagen oder Omnibus, wobei die die Lenkung der Räder der VLA/NLA bewirkenden Organe mechanisch nicht mit den Lenkungsorganen der Vorderachse des Nutzfahrzeugs gekoppelt und Teil einer eigenständigen Lenkungsanlage sind, **dadurch gekennzeichnet, dass** der Antrieb der VLA/NLA (3)
a) bei unterhalb einer festgelegten Fahrgeschwindigkeit erkannten Störungen in der Lenkungsanlage (22, 23, 24, 25, 26) der VLA/NLA (3) oder
b) bei Überschreiten einer festgelegten Fahrgeschwindigkeit oder
c) bedarfsabhängig, sobald der Schlupf an einer anderen angetriebenen Fahrzeugachse (2) unter einen vorbestimmten Schwellenwert abfällt,
abgeschaltet, wahlweise auch die Lenkungsanlage der VLA/NLA abgeschaltet wird.

2. Verfahren nach Anspruch 1, **dadurch gekennzeichnet, dass** in Verbindung mit einkreisigen VLA/NLA-Lenkungsanlagen die Version a) in der Weise zur Anwendung kommt, dass bei unterhalb der festgelegten Fahrgeschwindigkeit erkannten Störungen in der Lenkungsanlage der VLA/NLA (3) der Antrieb der VLA/NLA (3) abgeschaltet und die Lenkungsanlage in einen wirkungslosen Zustand versetzt wird, so dass die lenkungsmäßig freigegebenen, nicht mehr angetriebenen Räder (19, 20) der VLA/NLA (3) der durch die Reibungskräfte und den Nachlauf bestimmten Bahn folgen können.

3. Verfahren nach Anspruch 1, **dadurch gekennzeichnet, dass** in Verbindung mit einkreisigen VLA/NLA-Lenkungsanlagen, falls keine Störungsmeldung vorliegt, die Version b) in der Weise zur Anwendung kommt, dass bei Überschreiten der festgelegten Fahrgeschwindigkeit sowohl der Antrieb als auch die Lenkungsanlage der VLA/NLA (3) abgeschaltet werden, wobei die Abschaltung des Antriebs in der Regel zeitlich vor, maximal gleichzeitig mit der Abschaltung der Lenkungsanlage erfolgt und die Lenkungsanlage in einen Zustand versetzt wird, in dem keine Lenkbewegung veranlasst wird und die lenkungsmäßig freigegebenen, nicht mehr angetriebenen Räder (19, 20) der VLA/NLA (3) der durch die Reibungskräfte und den Nachlauf bestimmten Bahn folgen können.

4. Verfahren nach Anspruch 1, **dadurch gekennzeichnet, dass** - sofern keine Störungsmeldung vorliegt - die Version c) in der Weise zur Anwendung kommt, dass der Antrieb der VLA/NLA (3) - solange ein eine festgelegte Größe überschreitender Schlupf der Räder (28, 29) einer angetriebenen Achse (2) gegenüber jenen (13, 14) einer nicht angetriebenen Achse (1) festgestellt wird - aufrechtgehalten bleibt, aber bei Absinken dieses Schlupfes unter die festgelegte Größe ausgeschaltet wird und dass wahlweise außerdem, sobald bei Weiterfahrt die vorgegebene Fahrgeschwindigkeit überschritten wird, auch die Lenkungsanlage der VLA/NLA (3) abgeschaltet und diese in einen Zustand versetzt wird, in dem keine Lenkbewegung mehr bewirkt wird und die lenkungsmäßig freigegebenen, nicht mehr angetriebenen Räder (19, 20) der VLA/NLA (3) der durch die Reibungskräfte und den Nachlauf bestimmten Bahn folgen können.

5. Verfahren nach Anspruch 1, **dadurch gekennzeichnet, dass** in Verbindung mit zweikreisigen VLA/NLA-Lenkungsanlagen, bei denen der erste Kreis der Normalbetriebskreis und der zweite Kreis ein Sicherheitsbetriebskreis ist, die Version a) in der Weise zur Anwendung kommt, dass bei unterhalb der festgelegten Fahrgeschwindigkeit erkannten Störungen im ersten Kreis der Lenkungsanlage der VLA/NLA (3) der Antrieb der VLA/NLA (3) abgeschaltet wird und anschließend deren Räder (19, 20) mit vermindertem Kraftaufwand mittels des zweiten Kreises der Lenkungsanlage in ihre dem Geradeauslauf entsprechende Mittelstellung überführt oder weiterhin gelenkt werden können.

6. Verfahren nach den Ansprüchen 2 und 5, **dadurch gekennzeichnet, dass** die Feststellung eines Störungszustandes in der Lenkungsanlage der VLA/NLA (3) durch einen Soll-Istwert-Vergleich des Lenkwinkels erfolgt, wobei bei nicht ausgeregelten Lenkungen oder Störungen in der Lenkungsanlage eine Störmeldung erfolgt, die als Signal für die Abschaltung des Antriebs der VLA/NLA (3) herangezogen wird, wobei die besagte Störmeldung jedes Signal sein kann, das eine Aussage über den Zustand der Lenkungsanlage der VLA/NLA (3) ermöglicht, z. B. eine Stromunterbrechung im elektrischen Steuerungsteil, Druckabfall an einer signifikanten Stelle im Hydrauliksystem.

7. Verfahren nach einem der vorhergehenden Ansprüche, **dadurch gekennzeichnet, dass** die Abschaltung des Antriebs der VLA/NLA (3), sofern diese vom Achsgetriebe (5) einer vor- oder nachgeordneten angetriebenen Achse (2) her über eine Kardanwelle (8) angetrieben ist, mechanisch durch Öffnung einer vorher geschlossenen Kupplung (9) erfolgt.

8. Verfahren nach einem der Ansprüche 1 bis 6, **dadurch gekennzeichnet, dass** die Abschaltung des Antriebs der VLA/NLA (3), falls deren Räder elektromotorisch oder hydromotorisch angetrieben werden, durch Abschaltung der Energiezufuhr zu den betreffenden Antriebsaggregaten erfolgt.

9. Verfahren nach Anspruch 4, **dadurch gekennzeichnet, dass** ein Schlupf der Räder (28, 29) der angetriebenen Achse (2) gegenüber jenen (13, 14) einer nicht angetriebenen Achse (1) durch Messung der Raddrehzahlen mit Mitteln, die Teile fahrzeuginterner Systeme, wie Antiblockiersystem, Antischlupfregelsystem, Fahrstabilisationssystem sind, und durch elektronischen Vergleich dieser Drehzahlen erfasst wird, und dass, sobald von der Elektronik (12) ein Schlupfwert unter einer festgelegten Größe erkannt wird, ein die Abschaltung des VLA/NLA-Antriebes initiierendes Signal abgegeben wird.

## Claims

1. Procedure for influencing the steering system and/or the drive system, which can be engaged if required, of a leading or trailing axle (LA/TA) in a commercial vehicle, particularly a truck or bus/coach, whereby the organs steering the wheels on the LA/TA are not mechanically linked with the steering organs for the front axle of the commercial vehicle and are part of an independent steering system, **characterised in that** the drive system for the LA/TA (3) is switched off and, optionally, the steering system for the LA/TA is also switched off
a) if faults in the steering system (22, 23, 24, 25, 26) of the LA/TA (3) are recognised below a specified road speed
b) if a specified road speed is exceeded or
c) if required as soon as the wheel slip on another driven vehicle axle (2) drops below a specified threshold value.

2. Procedure according to Claim 1, **characterised in that** in conjunction with single-circuit LA/TA steering systems version a) is employed in such a way that if faults in the steering system for the LA/TA (3) are recognised below the specified road speed the drive system for the LA/TA (3) will be switched off and the steering system will be rendered ineffective so that the wheels (19, 20) on the LA/TA (3) are released from the steering action, are no longer driven and can follow the path determined by the frictional forces and by the caster action.

3. Procedure according to Claim 1, **characterised in that** in conjunction with single-circuit LA/TA steering systems, if no fault is present, version b) is employed in such a way that both the drive system and the steering system for the LA/TA (3) will be switched off if a specified road speed is exceeded, whereby the drive system is switched off usually before or, at most, simultaneously with the steering system and the steering system will be put into a condition in which no steering movements are caused and the wheels (19, 20) on the LA/TA (3) are released from the steering action, are no longer driven and can follow the path determined by the frictional forces and by the caster action.

4. Procedure according to Claim 1, **characterised in that** - if no fault message is present - version c) is employed in such a way that the drive system for the LA/TA (3) remains active as long as a slip on the wheels (28, 29) of a driven axle (2) is recognised in relation to the wheels (13, 14) on a non-driven axle (1), said slip exceeding a specified value, but is switched off when the slip falls below this specified value and that, optionally, if the journey is continued and as soon as the specified road speed is thereby exceeded, the steering system for the LA/TA (3) will also be switched off and that the LA/TA (3) will be put into a condition in which steering movements are no longer caused and the wheels (19, 20) on the LA/TA (3) are released from the steering action, are no longer driven and can follow the path determined by the frictional forces and by the caster action.

5. Procedure according to Claim 1, **characterised in that** in conjunction with dual-circuit LA/TA steering systems in which the first circuit is the normal-operation circuit and the second circuit is the safety-operation circuit, version a) is employed in such a way that if faults in the first circuit of the steering system of the LA/TA (3) are recognised at a speed below the specified road speed, the drive system for the LA/TA (3) will be switched off and, subsequently, the wheels (19, 20) on said LA/TA (3) can, with reduced force and by means of the second circuit of the steering system, be brought into their centre position corresponding to a straight-ahead running position or can continue to be steered.

6. Procedure according to the Claims 2 and 5, **characterised in that** faults in the steering system for the LA/TA (3) are recognised by means of a comparison between the nominal and the actual values of the steering angle, a fault message being indicated in the event of non-adjusted steering actions or of faults in the steering system, which fault message is used as a signal for switching off the drive system for the LA/TA (3), whereby said fault signal can be any signal enabling a statement on the condition of the steering system for the LA/TA (3), eg a power interruption in the electric control part or a drop in pressure at an important point in the hydraulic system.

7. Procedure according to one of the foregoing Claims, **characterised in that** the drive system for the LA/TA (3) is switched off mechanically by the opening of a previously engaged clutch (9) provided that said LA/TA (3) is powered via a propshaft (8) by the axle driving head (5) of a driven axle (2) arranged in front of or behind said LA/TA (3).

8. Procedure according to one of the Claims 1 to 6, **characterised in that** the drive system for the LA/TA (3) is switched off by stopping the power supply to the drive units concerned if the wheels of said LA/TA (3) are driven by electric or hydraulic motors.

9. Procedure according to Claim 4, **characterised in that** the slip of the wheels (28, 29) on the driven axle (2) in relation to those (13, 14) on a non-driven axle (1) is ascertained by measuring the wheel speed with means which are parts of vehicle-intemal systems such as the anti-lock system, anti-slip system, directional stabilisation system and by means of an electronic comparison of these speed figures and that as soon as the electronics (12) recognises a slip value below a specified value a signal initiating the switching-off of the LA/TA (3) is emitted.

## Revendications

1. Procédé pour influencer la direction et/ou l'entraînement en fonction des besoins d'un essieu poussé ou traîné sur un véhicule industriel, en particulier sur un camion ou un autobus/car, dans le cas où les organes entraînant la direction des roues de l'essieu poussé ou traîné ne sont pas couplés mécaniquement avec les organes de direction de l'essieu avant du véhicule industriel et où ils font partie d'un système de direction autonome, **caractérisé par le fait que** l'entraînement de l'essieu poussé ou traîné (3) est déconnecté, et au choix, que le système de direction de l'essieu poussé ou traîné est également déconnecté
a) en cas d'anomalies détectées dans le système de direction (22, 23 ,24, 25, 26) de l'essieu poussé ou traîné (3) lorsque le véhiculé roule à une vitesse inférieure à celle déterminée ou
b) lorsque le véhicule roule à une vitesse supérieure à celle déterminée ou
c) en fonction des besoins, dès que le patinage au niveau d'un autre essieu entraîné du véhicule tombe sous une valeur seuil prédéfinie.

2. Procédé selon la revendication 1 **caractérisé par le fait que** la version a) peut être appliquée dans les faits en relation avec des systèmes de direction de l'essieu poussé ou traîné à un seul circuit, que l'entraînement de l'essieu poussé ou traîné (3) est stoppé lors d'anomalies détectées au niveau du système de direction de l'essieu poussé ou traîné (3) lorsque le véhicule roule à une vitesse inférieure à celle définie et que le système de direction est mis en état désactivé de telle manière que les roues (19, 20) de l'essieu poussé ou traîné (3), qui ne sont plus entraînées et qui ne peuvent plus être dirigées, puissent suivre la voie définie par les forces de friction et par la chasse positive.

3. Procédé selon la revendication 1 **caractérisé par le fait que** la version b) peut être appliquée dans les faits en relation avec des systèmes de direction de l'essieu poussé ou traîné à un seul circuit si aucun message d'anomalie n'apparaît, que l'entraînement ainsi que le système de direction de l'essieu poussé ou traîné (3) sont arrêtés en cas de dépassement de la vitesse déterminée, en prenant en compte **le fait que** l'arrêt de l'entraînement se produit en général avant l'arrêt du système de direction, et au plus tard en même temps, et que le système de direction est mis en état désactivé dans lequel aucun mouvement de la direction n'est possible et de telle manière que les roues (19, 20) de l'essieu poussé ou traîné (3), qui ne sont plus entraînées et qui ne peuvent plus être dirigées, puissent suivre la voie définie par les forces de friction et par la chasse positive.

4. Procédé selon la revendication 1 **caractérisé par le fait que** - dans la mesure où aucun message d'anomalie n'apparaît - la version c) peut être appliquée dans les faits, que - tant qu'un patinage des roues (28, 29), dépassant la valeur définie, d'un essieu entraîné (2) est constaté par rapport aux roues (13, 14) d'un essieu non entraîné (1) - l'entraînement de l'essieu poussé ou traîné est conservé, mais est désactivé lorsque le patinage passe en dessous de la valeur déterminée, et que, au choix, tant que la vitesse de marche prédéfinie est dépassée pendant la poursuite de la marche, également le système de direction de l'essieu poussé ou traîné (3) est déconnecté et que celui-ci est mis en état désactivé dans lequel aucun mouvement de la direction n'est possible et de telle manière que les roues (19, 20) de l'essieu poussé ou traîné (3), qui ne sont plus entraînées et qui ne peuvent plus être dirigées, puissent suivre la voie définie par les forces de friction et par la chasse positive.

5. Procédé selon la revendication 1 **caractérisé par le fait que** la version a) peut être appliquée dans les faits en relation avec des systèmes de direction de l'essieu poussé ou traîné à deux circuits, selon lesquels le premier circuit est le circuit de fonctionnement normal et le deuxième circuit un circuit de fonctionnement de sécurité, que, lors de l'apparition d'anomalies détectées dans le premier circuit du système de direction de l'essieu poussé ou traîné (3) lorsque le véhicule roule à une vitesse en dessous de celle définie, l'entraînement de l'essieu poussé ou traîné (3) est déconnecté et que ses roues (19, 20) peuvent être guidées dans leur position médiane correspondant à la tenue de cap avec un effort réduit et peuvent être encore dirigées.

6. Procédé selon les revendications 2 et 5 **caractérisé par le fait qu'**un état de dysfonctionnement dans le système de direction de l'essieu poussé ou traîné (3) est constaté par une comparaison de la valeur réelle à la valeur nominale de l'angle de braquage dans le cas où apparaît, en cas de mouvements de direction non régulés complètement ou d'anomalies dans le système de direction, un message d'anomalie qui sera interprété comme signal pour l'arrêt de l'entraînement de l'essieu poussé ou traîné (3), dans le cas où ce message d'anomalie peut être chaque signal qui permet de déterminer l'état du système de direction de l'essieu poussé ou traîné (3), par exemple une coupure de courant dans la partie électrique de commande, une chute de la pression au niveau d'un point significatif dans le système hydraulique.

7. Procédé selon l'une des revendications citées précédemment **caractérisé par le fait que** l'arrêt de l'entraînement de l'essieu poussé ou traîné (3) - dans la mesure où ce dernier est entraîné par le nez de pont (5) d'un essieu entraîné placé en amont ou en aval (2) par le biais d'un arbre à cardan (8) - s'effectue mécaniquement par l'ouverture d'un accouplement (9) fermé auparavant.

8. Procédé selon l'une des revendications 1 à 6 **caractérisé par le fait que** l'arrêt de l'entraînement de l'essieu poussé ou traîné (3), au cas où ses roues sont entraînées par moteur électrique ou moteur à hydrogène, s'effectue par l'arrêt de l'alimentation en énergie des organes d'entraînement concernés.

9. Procédé selon la revendication 4 **caractérisé par le fait qu'**un patinage des roues (28, 29) de l'essieu entraîné (2) par rapport aux roues (13, 14) d'un essieu non entraîné (1) est saisi par le calcul de la vitesse de rotation des roues par le biais de moyens qui font partie de systèmes internes au véhicule, tels que le système d'antiblocage de roues, le système de régulation de l'antipatinage, le système de stabilisation de la marche, et par la comparaison électronique de ces vitesses de rotation, et que, tant qu'une valeur de patinage est détectée en dessous de la valeur déterminée par le système électronique (12), un signal provoquant l'arrêt de l'entraînement de l'essieu poussé ou traîné est émis.
